# EUROPEAN PATENT APPLICATION

(11) **EP 2 451 240 A1**
(43) Date of publication of application: **09.05.2012**
(21) Application number: 10794166.8
(22) Date of filing: 30.06.2010
(51) Int. Cl.: H04W 76/06, H04W 76/02

(54) **MOBILE COMMUNICATION METHOD, MOBILE COMMUNICATION SYSTEM, MOBILE STATION, MOBILITY MANAGEMENT ENTITY AND RADIO BASE STATION**

(30) Priority: 02.07.2009 JP 2009158300; 17.08.2009 JP 2009188785; 21.08.2009 JP 2009192585
(71) Applicant: NTT DOCOMO, INC., Chiyoda-ku Tokyo 100-6150 (JP)
(72) Inventor: NISHIDA, Katsutoshi, Tokyo 100-6150 (JP); KANAUCHI, Masashi, Tokyo 100-6150 (JP); SUZUKI, Keisuke, Tokyo 100-6150 (JP); IWAMURA, Mikio, Tokyo 100-6150 (JP)
(74) Representative: HOFFMANN EITLE
(86) International application number: PCT/JP2010/061106
(87) International publication number: WO 2011/001998

(57) **Abstract**

A mobile communication method according to the present invention comprising a step in which the mobile station activates a the reconnection waiting timer for GBR disconnection when RLF has been detected in the AS-GBR bearer, and the mobile station deletes AS bearer related to the AS-GBR bearer when expiration of the reconnection waiting timer for GBR disconnection has been detected before restoration of the AS-GBR bearer is detected, a step in which the mobile station activates a NAS-GBR bearer release timer when deleting the AS bearer information, and the mobile station deletes NAS bearer information related to the NAS-GBR bearer when expiration of the NAS-GBR bearer release timer has been detected.

## Description

### TECHNICAL FIELD

The present invention relates to a mobile communication method, a mobile communication system, a mobile station, a mobile management device, and a radio base station.

### BACKGROUND ART

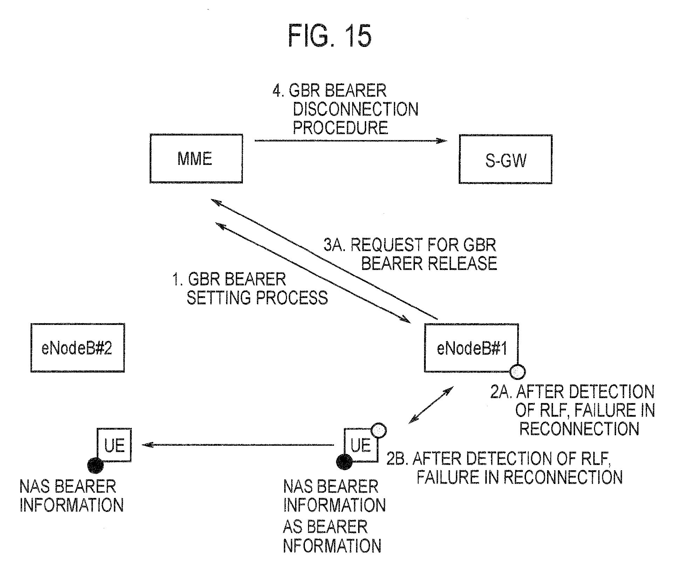

With reference to Fig. 15, in a radio access network of an LTE (Long Term Evolution) scheme, incorporated in an EPC (Evolved Packet Core) network, an operation when RLF (Radio Link Failure) has occurred in an AS (Access Stratum)-GBR (Guaranteed Bit Rate) bearer between a mobile station UE and a radio base station eNodeB#1 will be described.

As illustrated in Fig. 15, in step 1, a NAS (Non Access Stratum)-GBR bearer is set between a mobile management device MME (Mobility Management Entity) and the mobile station UE, and the AS-GBR bearer is set between a radio base station eNodeB and the mobile station UE.

Here, the NAS-GBR bearer and the AS-GBR bearer are bearers for performing GBR-type (transmission speed guarantee-type) communication.

When the RLF is detected in the AS-GBR bearer by the radio base station eNodeB#1 and a reconnection process of the AS-GBR bearer has failed in step 2A, the radio base station eNodeB#1 notifies the mobile management device MME that the AS-GBR bearer in the radio base station eNodeB#1 has been opened for the NAS-GBR bearer corresponding to the AS-GBR bearer in step 3A. In step 4, a disconnection procedure of the NAS-GBR bearer is performed between the mobile management device MME and a gateway device S-GW (Serving-Gateway).

Meanwhile, when the RLF is detected in the AS-GBR bearer by the mobile station UE and the reconnection process of the AS-GBR bearer has failed in step 2B, the mobile station UE deletes AS bearer information related to the AS-GBR bearer in step 3B.

### SUMMARY OF THE INVENTION

### PROBLEMS TO BE SOLVED BY THE INVENTION

However, when the RLF is detected in the AS-GBR bearer by the mobile station UE and the reconnection process of the AS-GBR bearer has failed, the timing at which NAS bearer information related to the NAS-GBR bearer is deleted has not been defined in the above-mentioned mobile communication system.

Therefore, there is a problem that it is not possible to provide the above-mentioned mobile communication system while making distinction between: GBR-type communication, in which the NAS-GBR bearer is disconnected when the AS-GBR bearer is disconnected; and GBR-type communication in which the NAS-GBR bearer is not disconnected even when the AS-GBR bearer is disconnected.

Therefore, the present invention has been achieved in view of the above-described problems, and an object thereof is to provide a mobile communication method, a mobile communication system, a mobile station, a mobile management device, and a radio base station, capable of controlling the disconnection timing, when the AS-GBR bearer has been disconnected, for each NAS-GBR bearer.

### MEANS FOR SOLVING THE PROBLEM

A gist of a first characteristic of the present invention is a mobile communication method comprising, a step of setting a first bearer for transmission speed guarantee-type communication between a mobile station and a radio base station and setting a second bearer for transmission speed guarantee-type communication between the mobile station and a mobile management device, a step in which the mobile station activates a first timer when obstruction has been detected in the first bearer, a step in which the mobile station deletes information related to the first bearer when expiration of the first timer has been detected before restoration of the first bearer is detected, a step in which the mobile station activates a second timer when deleting the information related to the first bearer, and a step in which the mobile station deletes information related to the second bearer when expiration of the second timer has been detected.

A gist of a second characteristic of the present invention is a mobile communication system so configured that a first bearer for transmission speed guarantee-type communication is set between a mobile station and a radio base station and a second bearer for transmission speed guarantee-type communication is set between the mobile station and a mobile management device, wherein the mobile station comprises, a first layer function configured to activate a first timer when obstruction has been detected in the first bearer, and delete information related to the first bearer when expiration of the first timer has been detected before restoration of the first bearer is detected, and a second layer function configured to activate a second timer after the information related to the first bearer is deleted, and delete information related to the second bearer when expiration of the second timer has been detected.

A gist of a third characteristic of the present invention is a mobile station so configured that a first bearer for transmission speed guarantee-type communication is set between the mobile station and a radio base station and a second bearer for transmission speed guarantee-type communication is set between the mobile station and a mobile management device, the mobile station comprising, a first layer function configured to activate a first timer when obstruction has been detected in the first bearer, and delete information related to the first bearer when expiration of the first timer has been detected before restoration of the first bearer is detected, and a second layer function configured to activate a second timer when the information related to the first bearer is deleted, and delete information related to the second bearer when expiration of the second timer has been detected.

A gist of a forth characteristic of the present invention is a mobile management device configured to set a second bearer between the mobile management device and a mobile station, the mobile management device comprising: a mobile station interface configured to notify the mobile station of a timer for each transmission speed guarantee-type communication in a location registration process of the mobile station, in which the timer is configured to be activated when information related to a first bearer for transmission speed guarantee-type communication corresponding to the timer is deleted by the mobile station.

A gist of a fifth characteristic of the present invention is a radio base station configured to set a first bearer between the radio base station and a mobile station, the radio base station comprising, a mobile station interface configured to notify the mobile station of a timer in a setting process of the first bearer, in which the timer is configured to be activated when obstruction in the first bearer is detected by the mobile station.

A gist of a sixth characteristic of the present invention is a mobile communication method comprising, a step of setting a first bearer for transmission speed guarantee-type communication between a mobile station and a radio base station and setting a second bearer for transmission speed guarantee-type communication between the mobile station and a mobile management device, a step in which the mobile station activates a first timer and a second timer when obstruction has been detected in the first bearer, a step in which the mobile station deletes information related to the first bearer when expiration of the first timer has been detected before restoration of the first bearer is detected, and a step in which the mobile station deletes information related to the second bearer when expiration of the second timer has been detected before the restoration of the first bearer is detected.

A gist of a seventh characteristic of the present invention is a mobile station so configured that a first bearer for transmission speed guarantee-type communication is set between the mobile station and a radio base station and a second bearer for transmission speed guarantee-type communication is set between the mobile station and a mobile management device, the mobile station comprising, a first layer function configured to activate a first timer when obstruction has been detected in the first bearer, and delete information related to the first bearer when expiration of the first timer has been detected before restoration of the first bearer is detected, and a second layer function configured to activate a second timer when the obstruction has been detected in the first bearer, and delete information related to the second bearer when expiration of the second timer has been detected before the restoration of the first bearer is detected.

A gist of a eighth characteristic of the present invention is a mobile management device configured to set a second bearer between the mobile management device and a mobile station, the mobile management device comprising: a radio base station interface configured to notify a radio base station of a timer for each transmission speed guarantee-type communication to be activated when obstruction has been detected in a fist bearer having been set between the radio base station and the mobile station.

### EFFECT OF THE INVENTION

As described above, according to the present invention, it is possible to provide a mobile communication method, a mobile communication system, a mobile station, a mobile management device, and a radio base station, capable of controlling the disconnection timing, when the AS-GBR bearer has been disconnected, for each NAS-GBR bearer.

### BRIEF DESCRIPTION OF THE DRAWINGS

[Fig. 1] Fig. 1 is a diagram explaining the entire configuration and operation of a mobile communication system according to a first embodiment of the present invention.
[Fig. 2] Fig. 2 is a diagram explaining the operation of a mobile management device according to the first embodiment of the present invention.
[Fig. 3] Fig. 3 is a diagram explaining the information element of "Attach Request Accept" and "Tracking Area Update Accept" transmitted by the mobile management device according to the first embodiment of the present invention.
[Fig. 4] Fig. 4 is a diagram explaining the function of a mobile station according to the first embodiment of the present invention.
[Fig. 5] Fig. 5 is a functional block diagram of the mobile management device according to the first embodiment of the present invention.
[Fig. 6] Fig. 6 is a functional block diagram of a radio base station according to the first embodiment of the present invention.
[Fig. 7] Fig. 7 is a diagram explaining the entire configuration and operation of a mobile communication system according to a first modification of the present invention.
[Fig. 8] Fig. 8 is a diagram explaining the operation of a mobile management device according to the first modification of the present invention.
[Fig. 9] Fig. 9 is a diagram explaining the information element of an "Activate dedicated EPS bearer context request" transmitted by a mobile management device according to the first modification of the present invention.
[Fig. 10] Fig. 10 is a diagram explaining a mobile communication system according to a second embodiment of the present invention.
[Fig. 11] Fig. 11 is a diagram explaining the mobile communication system according to the second embodiment of the present invention.
[Fig. 12] Fig. 12 is a diagram explaining the mobile communication system according to the second embodiment of the present invention.
[Fig. 13] Fig. 13 is a diagram explaining the mobile communication system according to the second embodiment of the present invention.
[Fig. 14] Fig. 14 is a diagram explaining a mobile communication system according to a third embodiment of the present invention.
[Fig. 15] Fig. 15 is a diagram explaining the operation of a conventional mobile communication system.

### BEST MODES FOR CARRYING OUT THE INVENTION

### (Mobile communication system according to first embodiment of present invention)

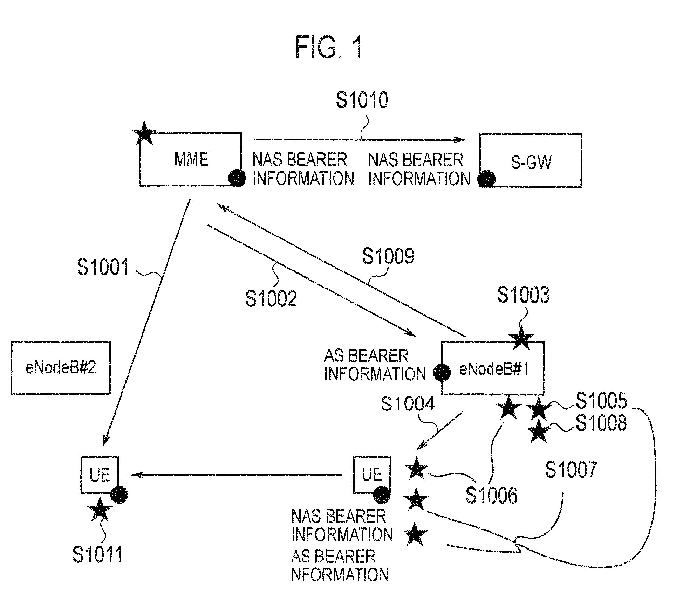

With reference to Fig. 1 to Fig. 6, the mobile communication system according to the first embodiment of the present invention will be described.

As illustrated in Fig. 1, the mobile communication system according to the present embodiment is provided with an EPC network accommodating a radio access network of an LTE scheme. Specifically, the mobile communication system according to the present embodiment is provided with a gateway device S-GW, a mobile management device MME, radio base stations eNodeB#1 and #2, and the like.

Furthermore, in the mobile communication system according to the present embodiment, an AS-GBR bearer (a first bearer) for GBR-type (transmission speed guarantee-type) communication may be set between a mobile station UE and the radio base stations eNodeB#1 and #2, and a NAS-GBR bearer (a second bearer) for the GBR-type communication may be set between the mobile station UE and the mobile management device MME.

Here, the mobile station UE is configured to perform the GBR-type communication via the AS-GBR bearer and the NAS-GBR bearer.

When the AS-GBR bearer is set, the mobile station UE and the radio base station eNodeB are configured to hold AS bearer information related to the AS-GBR bearer.

Furthermore, when the NAS-GBR bearer is set, the mobile station UE, the mobile management device MME, and the gateway device S-GW are configured to hold NAS bearer information related to the NAS-GBR bearer.

Hereinafter, with reference to Fig. 1, an operation of the mobile communication system according to the present embodiment when RLF has occurred in the AS-GBR bearer between the mobile station UE and the radio base station eNodeB#1 will be described.

As illustrated in Fig. 1, in step S1001, the mobile management device MME notifies the mobile station UE of a NAS-GBR bearer release timer (a second timer) in a location registration process of the mobile station UE, for example, an Attach process or a TAU (Tracking Area Update) process of the mobile station UE.

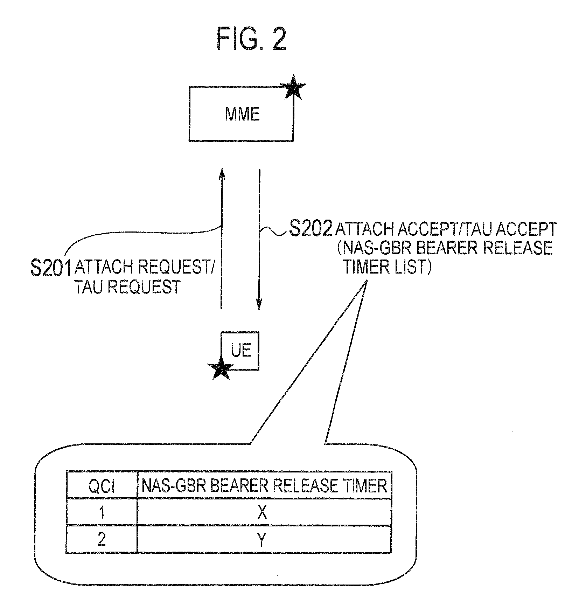

For example, as illustrated in Fig. 2, the mobile management device MME receives an "Attach Request" or a "TAU Request" from the mobile station UE in step S201, and transmits a NAS-GBR bearer release timer list including a plurality of NAS-GBR bearer release timers to the mobile station UE by an "Attach Accept" or a "TAU Accept" in response to the "Attach Request" or the "TAU Request" in step S202.

Here, as illustrated in Fig. 2, the NAS-GBR bearer release timer list includes a NAS-GBR bearer release timer for each QCI (QoS Class Identification), that is, a NAS-GBR bearer release timer for each GBR-type communication specified by the QCI.

In addition, the NAS-GBR bearer release timer list may include, instead of the QCI, a NAS-GBR bearer release timer for each of other information elements (for example, information specific to an application, and the like) managed by the mobile management device MME, that is, a NAS-GBR bearer release timer for each GBR-type communication specified by the information element.

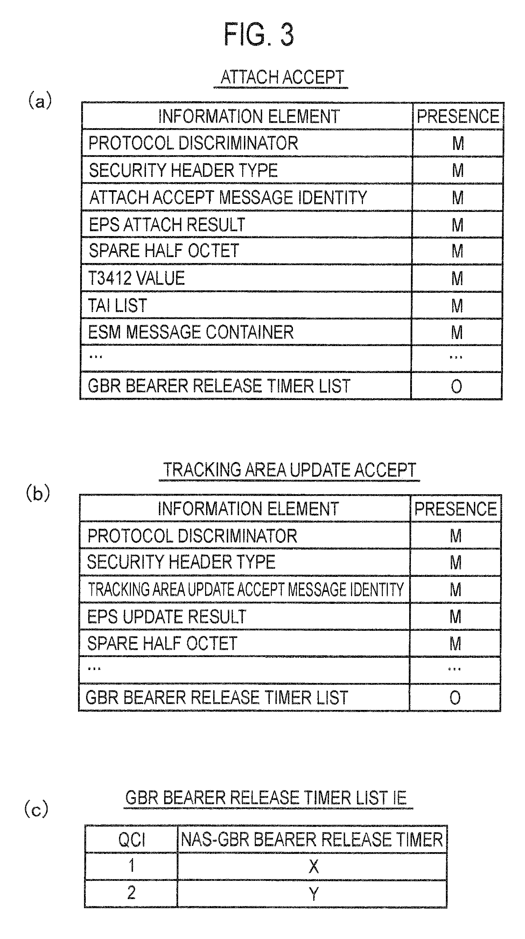

Fig. 3(a) illustrates an example of an information element included in the above-mentioned "Attach Accept", and Fig. 3(b) illustrates an example of an information element included in the above-mentioned "TAU Accept".

As illustrated in Fig. 3(c), the above-mentioned NAS-GBR bearer release timer list is transmitted by information elements "GBR Bearer Release Timer Lists" in the "Attach Accept" and the "TAU Accept".

Here, the mobile management device MME may determine the NAS-GBR bearer release timer list to be notified, based on station data set in advance, subscriber data notified from a subscriber management server device HSS (Home Subscriber Server), and the like.

Next, referring again to Fig. 1, in step S1002, the mobile management device MME transmits an "E-RAB Setup Request" including a QoS parameter such as QCI to the radio base station eNodeB#1.

In step S1003, the radio base station eNodeB#1 specifies GBR-type communication related to an AS-GBR bearer to be set and specifies a reconnection waiting timer for GBR disconnection (an AS-GBR release timer) to be applied to the GBR-type communication, in response to the QoS parameter included in the "E-RAB Setup Request".

In step S1004, the radio base station eNodeB#1 transmits an "RRC Connection Reconfiguration" including the specified reconnection waiting timer for GBR disconnection to the mobile station UE.

These processes are performed, so that the bearers (the AS-GBR bearer and the NAS-GBR bearer) related to the GBR-type communication are set, the mobile station UE, the mobile management device MME, and the gateway device S-GW hold the NAS bearer information related to the NAS-GBR bearer, and the mobile station UE and the radio base station eNodeB#1 hold the AS bearer information related to the AS-GBR bearer.

Then, if the RLF is detected in the AS-GBR bearer in step S1005, the mobile station UE and the radio base station eNodeB#1 activate the above-mentioned reconnection waiting timer for GBR disconnection and perform a reconnection process of the AS-GBR bearer in step S1006.

When the above-mentioned reconnection waiting timer for GBR disconnection has expired without the detection of the restoration of the AS-GBR bearer or when the reconnection process of the AS-GBR bearer has failed, the mobile station UE deletes the AS bearer information related to the AS-GBR bearer in step S1007.

Here, when deleting the AS bearer information, the mobile station UE extracts a NAS-GBR bearer release timer corresponding to the above-mentioned GBR-type communication from the above-mentioned NAS-GBR bearer release timer list, and activates the extracted NAS-GBR bearer release timer.

Furthermore, when the RLF has been detected in an uplink radio link between the radio base station eNodeB#1 and the mobile station UE, or when a predetermined trigger indicating the expiration and the like of the above-mentioned reconnection waiting timer for GBR disconnection has been detected, the radio base station eNodeB#1 deletes the AS bearer information related to the AS-GBR bearer in step S1008.

Here, the timing at which the AS bearer information is deleted by the radio base station eNodeB#1 may not coincide with the timing at which the AS bearer information is deleted by the mobile station UE.

When the above-mentioned reconnection waiting timer for GBR disconnection has expired without the detection of the restoration of the AS-GBR bearer or when the reconnection process of the AS-GBR bearer has failed, the radio base station eNodeB#1 transmits an "E-RAB Release Indication" to the mobile management device MME in step S1009.

In step S1010, the mobile management device MME performs "MME initiated Dedicated Bearer Deactivation" with respect to the gateway device S-GW in response to the received "E-RAB Release Indication", thereby deleting the bearer (the NAS-GBR bearer) related to the above-mentioned GBR-type communication. Here, it is assumed that a bearer (a NAS bearer) related to communication (for example, Non-GBR-type communication) other than the above-mentioned GBR-type communication is not deleted.

In addition, the mobile management device MME may delay the start of the process of step S1010 by the time corresponding to the NAS-GBR bearer release timer after receiving the "E-RAB Release Indication".

When the above-mentioned NAS-GBR bearer release timer has expired without the detection of the restoration of the AS-GBR bearer, the mobile station UE deletes the NAS bearer information related to the above-mentioned NAS-GBR bearer in step S1011.

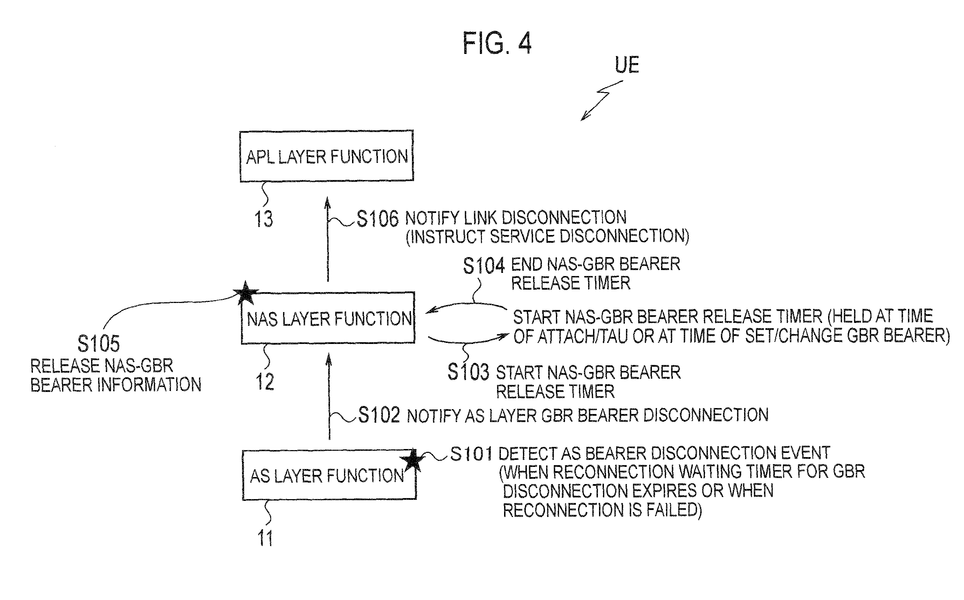

As illustrated in Fig. 4, the mobile station UE includes an AS layer function 11 (a first layer function), a NAS layer function 12 (a second layer function), and an APL (Application) layer function 13.

Hereinafter, with reference to Fig. 4, the operation of the mobile station UE when the RLF has occurred in the AS-GBR bearer will be specifically described.

If the RLF is detected in the AS-GBR bearer, the AS layer function 11 of the mobile station UE activates the above-mentioned reconnection waiting timer for GBR disconnection and performs the reconnection process of the AS-GBR bearer.

Then, when an AS bearer disconnection event has been detected in step S101, for example, when the expiration of the above-mentioned reconnection waiting timer for GBR disconnection has been detected without the detection of the restoration of the AS-GBR bearer or when the failure in the reconnection process of the AS-GBR bearer has been detected, the AS layer function 11 of the mobile station UE deletes the AS bearer information related to the above-mentioned AS-GBR bearer and notifies the NAS layer function 12 of the mobile station UE that the AS-GBR bearer has been disconnected in step S102.

If the above-mentioned notification is received, the NAS layer function 12 of the mobile station UE activates the NAS-GBR bearer release timer in step S103.

Then, when it is detected that the above-mentioned reconnection waiting timer for GBR disconnection has expired without the detection of the restoration of the AS-GBR bearer in step S104, the NAS layer function 12 of the mobile station UE deletes the NAS bearer information related to the AS-GBR bearer in step S105, and notifies the APL layer function 13 that the bearer related to the above-mentioned GBR-type communication has been disconnected in step S106. The APL layer function performs an appropriate process such as a communication completion process with respect to an application corresponding to the disconnected GBR-type communication.

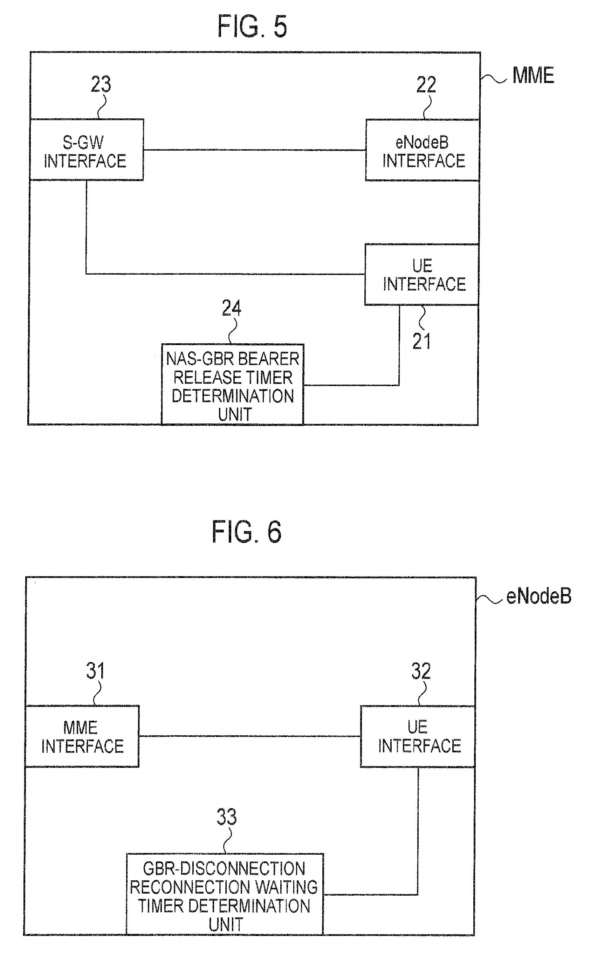

As illustrated in Fig. 5, the mobile management device MME includes a UE interface 21, an eNodeB interface 22, an S-GW interface 23, and a NAS-GBR bearer release timer determination unit 24.

The UE interface 21 serves as an interface between the mobile management device MME and the mobile station UE, the eNodeB interface 22 serves as an interface between the mobile management device MME and the radio base station eNodeB, and the S-GW interface 23 serves as an interface between the mobile management device MME and the gateway device S-GW.

For example, the UE interface 21 is configured to notify the mobile station UE of the NAS-GBR bearer release timer for each GBR-type communication, that is, the NAS-GBR bearer release timer list, in the Attach process or the TAU process of the mobile station UE.

Furthermore, the UE interface 21 is configured to set and manage a NAS bearer such as the NAS-GBR bearer between the mobile management device MME and the mobile station UE.

Furthermore, the eNodeB interface 22 is configured to transmit the "E-RAB Setup Request" including the QoS parameter such as the QCI to the radio base station eNodeB, or receive the "E-RAB Release Indication" from the radio base station eNodeB.

Furthermore, the S-GW interface 23 is configured to perform the "MME initiated Dedicated Bearer Deactivation" with respect to the gateway device S-GW.

The NAS-GBR bearer release timer determination unit 24 determines one or a plurality of NAS-GBR bearer release timers, which are to be notified to the mobile station UE, according to information set in advance in the mobile management device MME, subscriber information, the type of the GBR bearer specified by the QCI, and the like.

As illustrated in Fig. 6, the radio base station eNodeB includes an MME interface 31, a UE interface 32, and a GBR-disconnection reconnection waiting timer determination unit 33.

The MME interface 31 serves as an interface between the radio base station eNodeB and the mobile management device MME, and the UE interface 32 serves as an interface between the radio base station eNodeB and the mobile station UE.

For example, the MME interface 31 is configured to receive the "E-RAB Setup Request" including the QoS parameter such as the QCI from the mobile management device MME, or transmit the "E-RAB Release Indication" to the mobile management device MME.

Furthermore, the UE interface 32 is configured to set and manage an AS bearer such as the AS-GBR bearer between the radio base station eNodeB and the mobile station UE.

The GBR-disconnection reconnection waiting timer determination unit 33 determines the reconnection waiting timer for GBR disconnection, which is to be notified to the mobile station UE for each AS-GBR bearer, according to information also set in advance in the radio base station eNodeB, the type of the GBR bearer specified by the QCI, and the like.

In accordance with the mobile communication system according to the first embodiment of the present invention, the mobile management device MME transmits the NAS-GBR bearer release timer list including the NAS-GBR bearer release timer for each GBR-type communication to the mobile station UE, so that it is possible to control the disconnection timing of each GBR bearer.

### (First Modification)

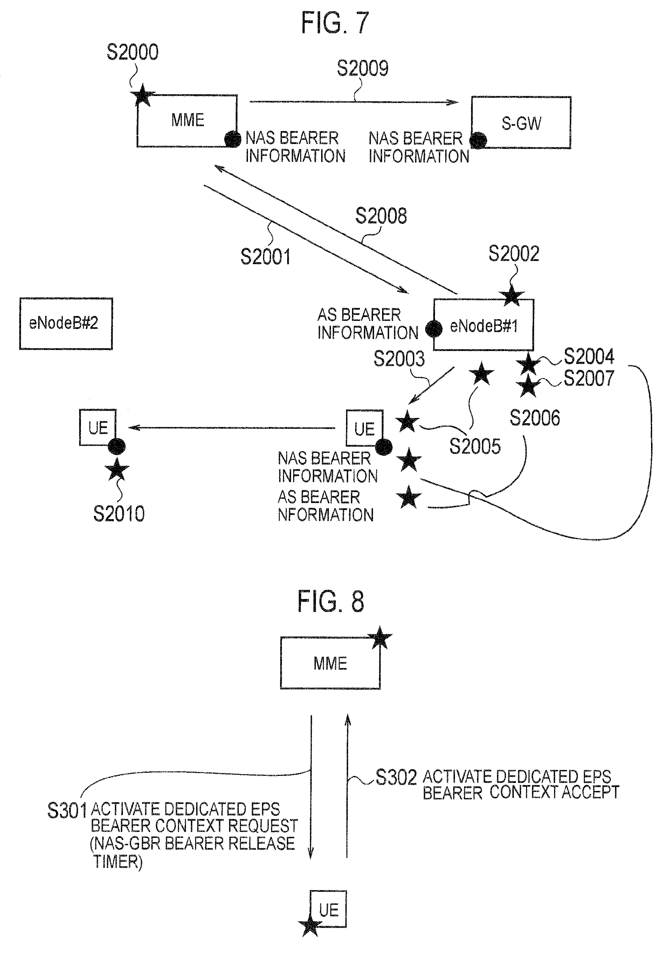

Hereinafter, with reference to Fig. 7, a mobile communication system according to the first modification of the present invention will be described while focusing on the difference from the mobile communication system according to the first embodiment as described above.

With reference to Fig. 7, the operation of the mobile communication system according to the present first modification when the RLF has occurred in the AS-GBR bearer between the mobile station UE and the radio base station eNodeB#1 will be described.

As illustrated in Fig. 7, if the setting of the GBR bearer is detected, the mobile management device MME specifies the NAS-GBR bearer release timer from the QoS parameter such as the QCI set in the GBR bearer, in step S2000.

In step S2001, the mobile management device MME transmits the "E-RAB Setup Request" including the QoS parameter such as the QCI and the NAS-GBR bearer release timer to the radio base station eNodeB#1.

In step S2002, the radio base station eNodeB#1 specifies the GBR-type communication related to the AS-GBR bearer, which is to be set, according to the QoS parameter included in the "E-RAB Setup Request", and specifies the reconnection waiting timer for GBR disconnection to be applied to the GBR-type communication.

In step S2003, the radio base station eNodeB#1 transmits the "RRC Connection Reconfiguration" including the specified reconnection waiting timer for GBR disconnection and the NAS-GBR bearer release timer included in "E-RAB Setup Request" to the mobile station UE.

These processes are performed, so that the bearers (the AS-GBR bearer and the NAS-GBR bearer) related to the GBR-type communication are set, the mobile station UE, the mobile management device MME, and the gateway device S-GW hold the NAS bearer information related to the NAS-GBR bearer, and the mobile station UE and the radio base station eNodeB#1 hold the AS bearer information related to the AS-GBR bearer.

Then, if the RL is detected in the AS-GBR bearer in step S2004, the mobile station UE and the radio base station eNodeB#1 activate the above-mentioned reconnection waiting timer for GBR disconnection and perform the reconnection process of the AS-GBR bearer in step S2005.

When the above-mentioned reconnection waiting timer for GBR disconnection has expired without the detection of the restoration of the AS-GBR bearer or when the reconnection process of the AS-GBR bearer has failed, the mobile station UE deletes the AS bearer information related to the AS-GBR bearer in step S2006.

Here, when deleting the AS bearer information, the mobile station UE activates the NAS-GBR bearer release timer notified by the "RRC Connection Reconfiguration".

Furthermore, when the RLF has been detected in an uplink radio link between the radio base station eNodeB#1 and the mobile station UE, or when a predetermined trigger indicating the expiration and the like of the above-mentioned reconnection waiting timer for GBR disconnection has been detected, the radio base station eNodeB#1 deletes the AS bearer information related to the AS-GBR bearer in step S2007.

Here, the timing at which the AS bearer information is deleted by the radio base station eNodeB#1 may not coincide with the timing at which the AS bearer information is deleted by the mobile station UE.

When the above-mentioned reconnection waiting timer for GBR disconnection has expired without the detection of the restoration of the AS-GBR bearer or when the reconnection process of the AS-GBR bearer has failed, the radio base station eNodeB#1 transmits the "E-RAB Release Indication" to the mobile management device MME in step S2008.

In step S2009, the mobile management device MME performs the "MME initiated Dedicated Bearer Deactivation" with respect to the gateway device S-GW in response to the received "E-RAB Release Indication", thereby deleting the bearer (the NAS-GBR bearer) related to the above-mentioned GBR-type communication. Here, it is assumed that a bearer (a NAS bearer) related to communication (for example, Non-GBR-type communication) other than the above-mentioned GBR-type communication is not deleted.

In addition, the mobile management device MME may delay the start of the process of step S2009 by the time corresponding to the NAS-GBR bearer release timer after receiving the "E-RAB Release Indication".

When the above-mentioned NAS-GBR bearer release timer has expired without the detection of the restoration of the AS-GBR bearer, the mobile station UE deletes the NAS bearer information related to the above-mentioned NAS-GBR bearer in step S2010. The APL layer function performs an appropriate process such as a communication completion process with respect to an application corresponding to the disconnected GBR-type communication.

In accordance with the mobile communication system according to the present first modification, the mobile management device MME transmits the NAS-GBR bearer release timer corresponding to the GBR bearer to be set to the mobile station UE, so that it is possible to control the disconnection timing of each GBR bearer.

Here, as illustrated in Fig. 8, the NAS-GBR bearer release timer is configured to be transmitted from the mobile management device MME to the mobile station UE by an "Activate dedicated EPS bearer context request" in step S301 (corresponding to steps S2001 and S2003).

In addition, in step S302, the mobile station UE transmits an "Activate dedicated EPS bearer context accept" to the mobile management device MME in response to the "Activate dedicated EPS bearer context request" received from the mobile management device MME.

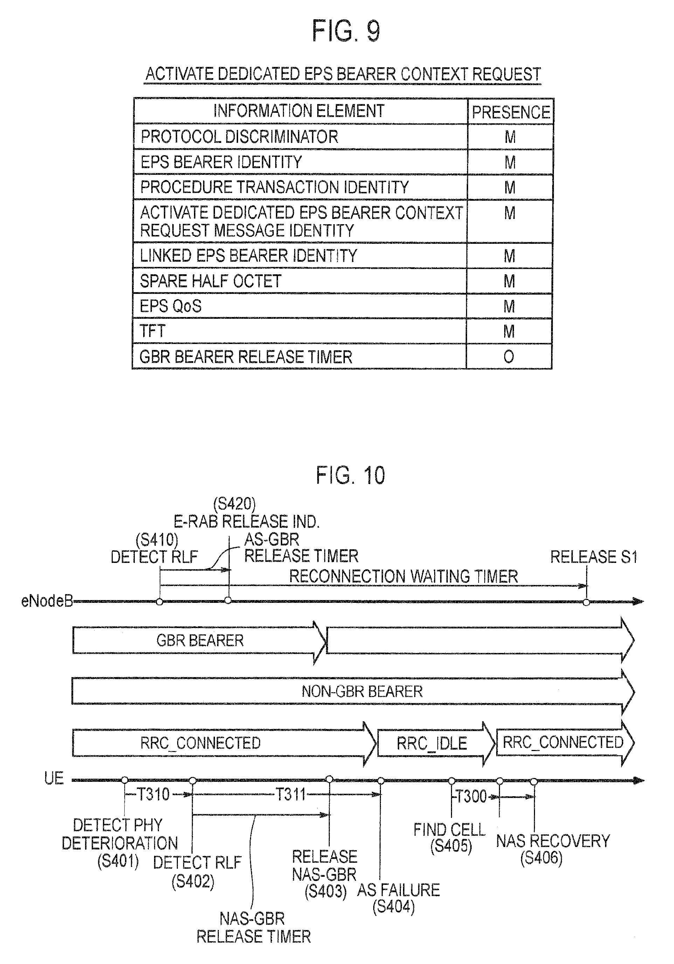

Fig. 9 illustrates an example of an information element included in the above-mentioned "Activate dedicated EPS bearer context request".

Here, as illustrated in Fig. 3(a) and Fig. 9, the above-mentioned NAS-GBR bearer release timer is transmitted by an information element "GBR Bearer Release Timer" in the "Activate dedicated EPS bearer context request".

In addition, the "Activate dedicated EPS bearer context request" indicates a NAS message included in the "E-RAB Setup Request" and the "RRC Connection Reconfiguration".

The characteristics of the present embodiment as described above may be expressed as follows.

A first characteristic of the present embodiment is summarized as a mobile communication method, comprising: a step of setting the AS-GBR bearer (the first bearer) for the GBR-type (transmission speed guarantee-type) communication between the mobile station UE and the radio base station eNodeB and setting the NAS-GBR bearer (the second bearer) for the GBR-type (transmission speed guarantee-type) communication between the mobile station UE and the mobile management device MME; a step in which the mobile station UE activates the reconnection waiting timer for GBR disconnection (the first timer) when the RLF (obstruction in the first bearer) has been detected in the AS-GBR bearer; a step in which the mobile station UE deletes the AS bearer information (information related to the first bearer) when the expiration of the reconnection waiting timer for GBR disconnection has been detected before the restoration of the AS-GBR bearer is detected; a step in which the mobile station UE activates the NAS-GBR bearer release timer (the second timer) when deleting the AS bearer information; and a step in which the mobile station UE deletes the NAS bearer information (information related to the second bearer) when the expiration of the NAS-GBR bearer release timer has been detected.

In the first characteristic of the present embodiment, the mobile communication method may further include a step in which the mobile management device MME notifies the mobile station UE of the NAS-GBR bearer release timer in the Attach process or the TAU process (the location registration process) of the mobile station UE.

In the first characteristic of the present embodiment, the mobile communication method may further include a step in which the radio base station eNodeB notifies the mobile station UE of the NAS-GBR bearer release timer in the setting process of the AS-GBR bearer.

A second characteristic of the present embodiment is summarized as a mobile communication system so configured that the AS-GBR bearer is set between the mobile station UE and the radio base station eNodeB and the NAS-GBR bearer is set between the mobile station UE and the mobile management device MME, wherein the mobile station UE comprises: an AS layer function 11 (the first layer function) configured to activate the reconnection waiting timer for GBR disconnection when the RLF has been detected in the AS-GBR bearer, and delete the AS bearer information when the expiration of the reconnection waiting timer for GBR disconnection has been detected before the restoration of the AS-GBR bearer is detected; and a NAS layer function 12 (the second layer function) configured to activate the NAS-GBR bearer release timer when the AS bearer information is deleted, and delete the NAS bearer information when the expiration of the NAS-GBR bearer release timer has been detected.

In the second characteristic of the present embodiment, the mobile management device MME may include the UE interface 21 (a mobile station interface) configured to notify the mobile station UE of the NAS-GBR bearer release timer in the Attach process or the TAU process of the mobile station UE.

In the second characteristic of the present embodiment, the radio base station eNodeB may include the UE interface 32 (a mobile station interface) configured to notify the mobile station UE of the NAS-GBR bearer release timer in the setting process of the AS-GBR bearer.

A third characteristic of the present embodiment is summarized as a mobile station UE configured to set the AS-GBR bearer between the mobile station UE and the radio base station eNodeB and set the NAS-GBR bearer between the mobile station UE and the mobile management device MME, the mobile station UE comprising: an AS layer function 11 configured to activate the reconnection waiting timer for GBR disconnection when the RLF has been detected in the AS-GBR bearer, and delete the AS bearer information when the expiration of the reconnection waiting timer for GBR disconnection has been detected before the restoration of the AS-GBR bearer is detected; and a NAS layer function 12 configured to activate the NAS-GBR bearer release timer when the AS bearer information is deleted, and delete the NAS bearer information when the expiration of the NAS-GBR bearer release timer has been detected.

A fourth characteristic of the present embodiment is summarized as a mobile management device MME configured to set the NAS-GBR bearer between the mobile management device MME and the mobile station UE, the mobile management device MME comprising: a UE interface 21 configured to notify the mobile station UE of the NAS-GBR bearer release timer for each GBR-type communication in the Attach process or the TAU process of the mobile station UE, wherein the NAS-GBR bearer release timer is configured to be activated when the AS bearer information corresponding to the NAS-GBR bearer release timer is deleted by the mobile station UE.

A fifth characteristic of the present embodiment is a radio base station eNodeB configured to set the AS-GBR bearer between the radio base station eNodeB and the mobile station UE, the radio base station eNodeB comprising: a UE interface 32 configured to notify the mobile station UE of the NAS-GBR bearer release timer in the setting process of the AS-GBR bearer, wherein the NAS-GBR bearer release timer may be configured to be activated when the RLF in the AS-GBR bearer has been detected by the mobile station UE.

### (Mobile communication system according to second embodiment of present invention)

With reference to Fig. 10 to Fig. 13, a mobile communication system according to a second embodiment of the present invention will be described. Hereinafter, the mobile communication system according to the second embodiment of the present invention will be described while focusing on the difference from the mobile communication system according to the first embodiment as described above.

As illustrated in Fig. 10, in the mobile communication system according to the second embodiment of the present invention, the mobile station UE activates a timer T310 in step S401 if the quality deterioration of the AS-GBR bearer is detected, and detects the RLF in the AS-GBR bearer according to the expiration of the timer T310 in step S402.

If the RLF is detected in the AS-GBR bearer, the mobile station UE activates a reconnection waiting timer for GBR disconnection (an AS-GBR release timer) T311 and a NAS-GBR release timer.

When the expiration of the NAS-GBR bearer release timer has been detected before the restoration of the AS-GBR bearer is detected, the mobile station UE releases the NAS-GBR bearer, that is, deletes the NAS bearer information in step S403.

When the expiration of the reconnection waiting timer for GBR disconnection (the AS-GBR release timer) T311 has been detected before the restoration of the AS-GBR bearer is detected, the mobile station UE releases the AS-GBR bearer, that is, deletes the AS bearer information, and enters an RRC_IDLE state from an RRC_CONNECTED state in step S404.

Then, when a communicable cell has been found, the mobile station UE activates a timer T300 in step S405, and when the timer T300 has expired, the mobile station UE enters the RRC_CONNECTED state. In step S406, the mobile station UE performs a NAS recovery process.

Meanwhile, if the RLF is detected in the AS-GBR bearer, the radio base station eNodeB activates the reconnection waiting timer for GBR disconnection (the AS-GBR release timer) in step S410.

When the mobile station UE detects the expiration of the reconnection waiting timer for GBR disconnection (the AS-GBR release timer) before detecting the restoration of the AS-GBR bearer, the radio base station eNodeB transmits a notification "E-RAB Release Indication" or "S1 Context Release Request" indicating the detection of the expiration to the mobile management device MME, and activates a reconnection waiting timer in step S411.

Then, when the mobile station UE detects the expiration of the reconnection waiting timer before detecting the restoration of the AS-GBR bearer, the radio base station eNodeB releases an S 1 connection between the mobile management device MME and the radio base station eNodeB.

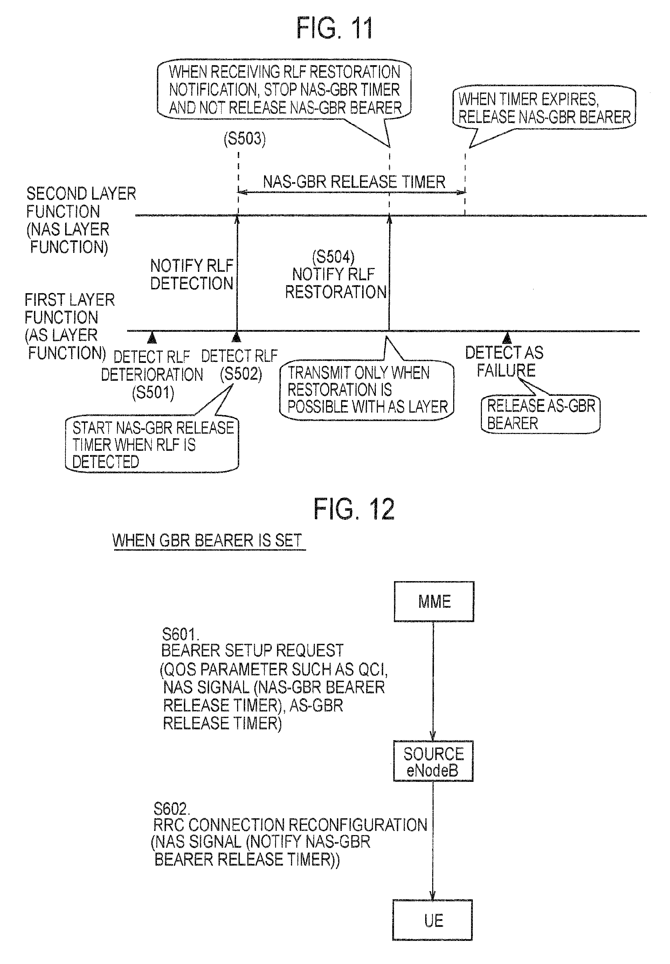

Furthermore, as illustrated in Fig. 11, in the mobile communication system according to the second embodiment of the present invention, it is configured such that if the AS layer function 11 of the mobile station UE detects the quality deterioration of the AS-GBR bearer in step S501, the AS layer function 11 activates a timer T310, detects the RLF in the AS-GBR bearer according to the expiration of the timer T310 in step S502, and notifies the NAS layer function 12 of the mobile station UE of the detection of the RLF.

Here, if the RLF is detected in the AS-GBR bearer, the AS layer function 11 of the mobile station UE is configured to activate the reconnection waiting timer for GBR disconnection (the AS-GBR release timer) T311.

Meanwhile, in step S503, the NAS layer function 12 of the mobile station UE is configured to activate the NAS-GBR release timer in response to the notification from the AS layer function 11 of the mobile station UE in step S502.

Then, if the restoration of the AS-GBR bearer is detected before the reconnection waiting timer for GBR disconnection (the AS-GBR release timer) T311 is expired, the AS layer function 11 of the mobile station UE is configured to notify the NAS layer function 12 of the mobile station UE of the detection of restoration in step S504.

Here, if the notification from the AS layer function 11 of the mobile station UE in step S504 is received before the expiration of the NAS-GBR bearer release timer is detected, the NAS layer function 12 of the mobile station UE is configured to stop the NAS-GBR release timer and not to release the NAS-GBR bearer.

Hereinafter, with reference to Fig. 12, the operation of the mobile communication system according to the present embodiment when the GBR bearer is set will be described.

As illustrated in Fig. 12, in step S601, the mobile management device MME transmits a "Bearer Setup Request" including the QoS parameter such as the QCI, the NAS-GBR bearer release timer, the AS-GBR bearer release timer and the like to the radio base station eNodeB.

In step S602, the radio base station eNodeB transmits the "RRC Connection Reconfiguration" including the NAS-GBR bearer release timer and the like to the mobile station UE.

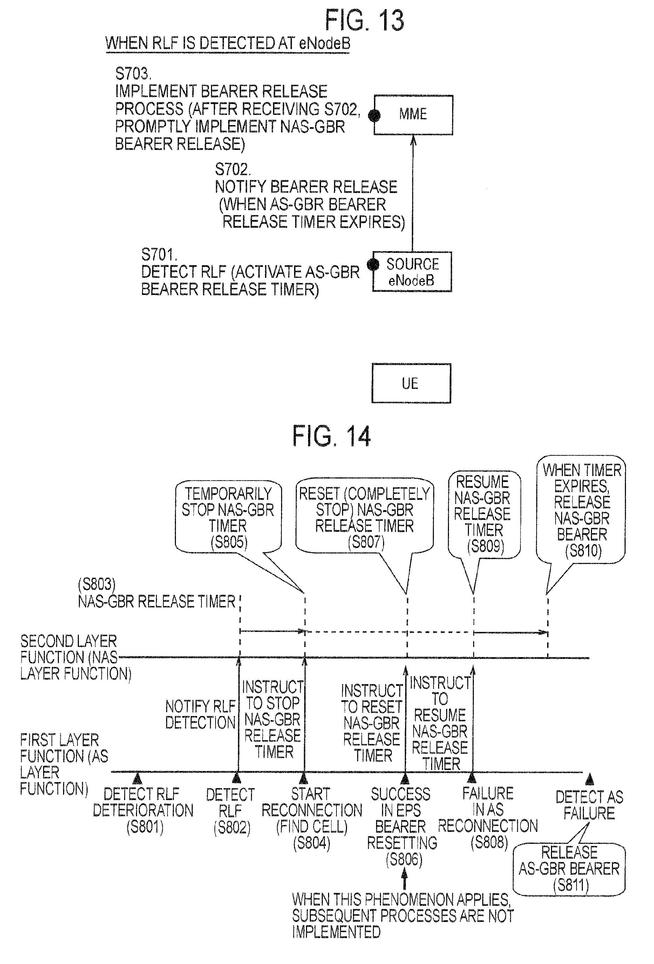

Next, with reference to Fig. 13, the operation of the mobile communication system according to the present embodiment when the radio base station eNodeB has detected the RLF in the AS-GBR bearer will be described.

As illustrated in Fig. 13, if the RLF is detected in the AS-GBR bearer, the radio base station eNodeB activates the AS-GBR bearer release timer in step S701.

If the expiration of the AS-GBR bearer release timer is detected before the restoration of the AS-GBR bearer is detected, the radio base station eNodeB transmits a bearer release notification indicating the detection of the restoration to the mobile management device MME in step S702.

If the bearer release notification is received from the radio base station eNodeB, the mobile management device MME immediately releases the NAS-GBR bearer in step S703.

In accordance with the mobile communication system according to the present embodiment, when the AS-GBR bearer release timer activated by the radio base station eNodeB and the AS-GBR bearer release timer activated by the mobile station UE have the same value, if the RLF is detected in the AS-GBR bearer, the NAS-GBR release process of the mobile station UE and the NAS-GBR release process of the mobile management device MME can be performed at an approximately similar timing, so that it is possible to complete the charging of the GBR bearer in a network almost at the same time when the application of the mobile station UE is completed.

The characteristics of the present embodiment as described above may be expressed as follows.

A first characteristic of the present embodiment is summarized as a mobile communication method, comprising: a step of setting the AS-GBR bearer for the GBR-type communication between the mobile station UE and the radio base station eNodeB and setting the NAS-GBR bearer for the GBR-type communication between the mobile station UE and the mobile management device MME; a step in which the mobile station UE activates the reconnection waiting timer for GBR disconnection (the AS-GBR release timer and the NAS-GBR release timer) when the RLF has been detected in the AS-GBR bearer; a step in which the mobile station UE deletes the AS bearer information when the expiration of the reconnection waiting timer for GBR disconnection has been detected before the restoration of the AS-GBR bearer is detected; and a step in which the mobile station UE deletes the NAS bearer information when the expiration of the NAS-GBR bearer release timer has been detected before the restoration of the AS-GBR bearer is detected.

In the first characteristic of the present embodiment, the mobile communication method may comprise: a step in which the radio base station eNodeB activates the reconnection waiting timer for GBR disconnection (the AS-GBR release timer) when the RLF has been detected in the AS-GBR bearer; a step in which the radio base station eNodeB transmits a bearer release notification to the mobile management device MME when the expiration of the NAS-GBR bearer release timer has been detected before the restoration of the AS-GBR bearer is detected; and a step in which the mobile management device MME releases the NAS-GBR bearer according to the bearer release notification.

A second characteristic of the present embodiment is summarized as a mobile station UE configured to set the AS-GBR bearer between the mobile station UE and the radio base station eNodeB and set the NAS-GBR bearer between the mobile station UE and the mobile management device MME, the mobile station UE comprising: an AS layer function 11 configured to activate the reconnection waiting timer for GBR disconnection (the AS-GBR release timer) when the RLF has been detected in the AS-GBR bearer, and delete the AS bearer information when the expiration of the reconnection waiting timer for GBR disconnection has been detected before the restoration of the AS-GBR bearer is detected; and a NAS layer function 12 configured to activate the NAS-GBR bearer release timer when the RLF has been detected in the AS-GBR bearer, and delete the NAS bearer information when the expiration of the NAS-GBR bearer release timer has been detected before the restoration of the AS-GBR bearer is detected.

In the second characteristic of the present embodiment, the AS layer function 11 is may be configured to notify the NAS layer function 12 of the detection of the restoration, when the restoration of the AS-GBR bearer has been detected before the expiration of the reconnection waiting timer for GBR disconnection is detected, and the NAS layer function 12 may be configured not to delete information related to the NAS-GBR bearer, when the above-mentioned notification is received before the expiration of the NAS-GBR bearer release timer is detected.

A third characteristic of the present embodiment is summarized as a mobile management device MME configured to set the NAS bearer between the mobile management device MME and the mobile station UE, the mobile management device MME comprising: an eNodeB interface 22 configured to notify the radio base station eNodeB of the AS-GBR release timer to be activated when the RLF has been detected in the AS bearer having been set between the radio base station eNodeB and the mobile station UE.

### (Mobile communication system according to third embodiment of present invention)

With reference to Fig. 14, a mobile communication system according to a third embodiment of the present invention will be described. Hereinafter, the mobile communication system according to the third embodiment of the present invention will be described while focusing on the difference from the mobile communication systems according to the first and second embodiments as described above.

As illustrated in Fig. 14, in the mobile communication system according to the third embodiment of the present invention, it is configured such that if the AS layer function 11 of the mobile station UE detects the quality deterioration of the AS-GBR bearer in step S801, the AS layer function 11 activates a timer T310, detects the RLF in the AS-GBR bearer according to the expiration of the timer T310 in step S802, and notifies the NAS layer function 12 of the mobile station UE of the detection of the RLF.

Here, if the RLF is detected in the AS-GBR bearer, the AS layer function 11 of the mobile station UE is configured to activate the reconnection waiting timer for GBR disconnection (the AS-GBR release timer) T311.

Meanwhile, in step S803, the NAS layer function 12 of the mobile station UE is configured to activate the NAS-GBR release timer according to the notification from the AS layer function 11 of the mobile station UE in step S802.

If a reconnection destination cell is found, the AS layer function 11 of the mobile station UE starts a reconnection process for the reconnection destination cell and transmits a NAS-GBR release timer stop command to the NAS layer function 12 of the mobile station UE in step S804.

In step S805, the NAS layer function 12 of the mobile station UE temporarily stops the NAS-GBR release timer according to the received NAS-GBR release timer stop command.

Here, when succeeding in the above-mentioned reconnection process and succeeding in the resetting of an EPS bearer, the AS layer function 11 of the mobile station UE transmits a NAS-GBR release timer reset command to the NAS layer function 12 of the mobile station UE in step S806.

In step S807, the NAS layer function 12 of the mobile station UE resets (completely stops) the NAS-GBR release timer according to the received NAS-GBR release timer reset command.

In addition, when having succeeded in the above-mentioned reconnection process and the EPS bearer has not been reset in step S806, the AS layer function 11 of the mobile station UE locally releases the EPS bearer.

Meanwhile, when having failed in the above-mentioned reconnection process, the AS layer function 11 of the mobile station UE transmits a NAS-GBR release timer resuming command to the NAS layer function 12 of the mobile station UE in step S808.

In step S809, the NAS layer function 12 of the mobile station UE resumes the NAS-GBR release timer according to the received NAS-GBR release timer resuming command.

Then, when the expiration of the NAS-GBR release timer has been detected before the restoration of the AS-GBR bearer is detected, the NAS layer function 12 of the mobile station UE releases the NAS-GBR bearer in step S810.

When AS failure has been detected before the restoration of the AS-GBR bearer is detected, the AS layer function 11 of the mobile station UE releases the AS-GBR bearer in step S811.

A first characteristic of the present embodiment is summarized as a mobile station UE configured to set the AS-GBR bearer between the mobile station UE and the radio base station eNodeB and set the NAS-GBR bearer between the mobile station UE and the mobile management device MME, the mobile station UE comprising: an AS layer function 11 configured to activate the reconnection waiting timer for GBR disconnection (the AS-GBR release timer) when the RLF has been detected in the AS-GBR bearer, and delete the AS bearer information when the expiration of the reconnection waiting timer for GBR disconnection has been detected before the restoration of the AS-GBR bearer is detected; and a NAS layer function 12 configured to activate the NAS-GBR bearer release timer when the RLF has been detected in the AS-GBR bearer, and delete the NAS bearer information when the expiration of the NAS-GBR bearer release timer has been detected before the restoration of the AS-GBR bearer is detected.

In the first characteristic of the present embodiment, the AS layer function 11 may be configured to transmit the NAS-GBR release timer stop command (stop command) to the NAS layer function 12, when the reconnection destination cell has been found after the RLF has been detected in the AS bearer, and the NAS layer function 12 may be configured to temporarily stop the NAS-GBR release timer stop command, when the NAS-GBR release timer stop command is received before the expiration of the NAS-GBR release timer is detected.

In the first characteristic of the present embodiment, after the RLF has been detected in the AS bearer and the reconnection destination cell has been found, when having failed in a reconnection to the reconnection destination cell, the AS layer function 11 may be configured to transmit the NAS-GBR release timer resuming command (resuming command) to the NAS layer function 12, and when the NAS-GBR release timer resuming command is received before the expiration of the NAS-GBR release timer is detected, the NAS layer function 12 may be configured to resume the NAS-GBR release timer.

In the first characteristic of the present embodiment, after the RLF has been detected in the AS bearer and the reconnection destination cell has been found, when having succeeded in the reconnection to the reconnection destination cell, the AS layer function 11 may be configured to transmit the NAS-GBR release timer reset command (complete stop) to the NAS layer function 12, and when the NAS-GBR release timer reset command is received before the expiration of the NAS-GBR release timer is detected, the NAS layer function 12 may be configured to reset the NAS-GBR release timer.

It is noted that the operation of the above-described the radio base station eNB, the mobile station UE , mobile management device MME or gateway device S-GW may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB, the mobile station UE , mobile management device MME or gateway device S-GW. Further, such a storage medium or a processor may be arranged, as a discrete component, in the radio base station eNB, the mobile station UE , mobile management device MME or gateway device S-GW.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A mobile communication method comprising:
a step of setting a first bearer for transmission speed guarantee-type communication between a mobile station and a radio base station and setting a second bearer for transmission speed guarantee-type communication between the mobile station and a mobile management device;
a step in which the mobile station activates a first timer when obstruction has been detected in the first bearer;
a step in which the mobile station deletes information related to the first bearer when expiration of the first timer has been detected before restoration of the first bearer is detected;
a step in which the mobile station activates a second timer when deleting the information related to the first bearer; and
a step in which the mobile station deletes information related to the second bearer when expiration of the second timer has been detected.

2. The mobile communication method according to claim 1, comprising: a step in which the mobile management device notifies the mobile station of the second timer in a location registration process of the mobile station.

3. The mobile communication method according to claim 1, comprising: a step in which the radio base station notifies the mobile station of the second timer in a setting process of the first bearer.

4. A mobile communication system so configured that a first bearer for transmission speed guarantee-type communication is set between a mobile station and a radio base station and a second bearer for transmission speed guarantee-type communication is set between the mobile station and a mobile management device, wherein the mobile station comprises:
a first layer function configured to activate a first timer when obstruction has been detected in the first bearer, and delete information related to the first bearer when expiration of the first timer has been detected before restoration of the first bearer is detected; and
a second layer function configured to activate a second timer after the information related to the first bearer is deleted, and delete information related to the second bearer when expiration of the second timer has been detected.

5. The mobile communication system according to claim 4, comprising: a mobile station interface in which the mobile management device is configured to notify the mobile station of the second timer in a location registration process of the mobile station.

6. The mobile communication system according to claim 4, comprising: a mobile station interface in which the radio base station is configured to notify the mobile station of the second timer in a setting process of the first bearer.

7. A mobile station so configured that a first bearer for transmission speed guarantee-type communication is set between the mobile station and a radio base station and a second bearer for transmission speed guarantee-type communication is set between the mobile station and a mobile management device, the mobile station comprising:
a first layer function configured to activate a first timer when obstruction has been detected in the first bearer, and delete information related to the first bearer when expiration of the first timer has been detected before restoration of the first bearer is detected; and
a second layer function configured to activate a second timer when the information related to the first bearer is deleted, and delete information related to the second bearer when expiration of the second timer has been detected.

8. A mobile management device configured to set a second bearer between the mobile management device and a mobile station, the mobile management device comprising: a mobile station interface configured to notify the mobile station of a timer for each transmission speed guarantee-type communication in a location registration process of the mobile station, wherein
the timer is configured to be activated when information related to a first bearer for transmission speed guarantee-type communication corresponding to the timer is deleted by the mobile station.

9. A radio base station configured to set a first bearer between the radio base station and a mobile station, the radio base station comprising: a mobile station interface configured to notify the mobile station of a timer in a setting process of the first bearer, wherein
the timer is configured to be activated when obstruction in the first bearer is detected by the mobile station.

10. A mobile communication method comprising:
a step of setting a first bearer for transmission speed guarantee-type communication between a mobile station and a radio base station and setting a second bearer for transmission speed guarantee-type communication between the mobile station and a mobile management device;
a step in which the mobile station activates a first timer and a second timer when obstruction has been detected in the first bearer;
a step in which the mobile station deletes information related to the first bearer when expiration of the first timer has been detected before restoration of the first bearer is detected; and
a step in which the mobile station deletes information related to the second bearer when expiration of the second timer has been detected before the restoration of the first bearer is detected.

11. The mobile communication method according to claim 10, comprising:
a step in which the radio base station activates the first timer when the obstruction has been detected in the first bearer; a step in which the radio base station transmits a bearer release notification to the mobile management device when expiration of the second timer has been detected before restoration of the first bearer is detected; and
a step in which the mobile management device releases the second bearer according to the bearer release notification.

12. A mobile station so configured that a first bearer for transmission speed guarantee-type communication is set between the mobile station and a radio base station and a second bearer for transmission speed guarantee-type communication is set between the mobile station and a mobile management device, the mobile station comprising:
a first layer function configured to activate a first timer when obstruction has been detected in the first bearer, and delete information related to the first bearer when expiration of the first timer has been detected before restoration of the first bearer is detected; and
a second layer function configured to activate a second timer when the obstruction has been detected in the first bearer, and delete information related to the second bearer when expiration of the second timer has been detected before the restoration of the first bearer is detected.

13. The mobile station according to claim 12, wherein, when restoration of the first bearer has been detected before expiration of the first timer is detected, the first layer function is configured to notify the second layer function of the detection of the restoration, and
when the notification is received before the expiration of the second timer is detected, the second layer function is configured not to delete the information related to the second bearer.

14. A mobile management device configured to set a second bearer between the mobile management device and a mobile station, the mobile management device comprising: a radio base station interface configured to notify a radio base station of a timer for each transmission speed guarantee-type communication to be activated when obstruction has been detected in a fist bearer having been set between the radio base station and the mobile station.

15. The mobile station according to claim 12, wherein,
when a reconnection destination cell has been found after the obstruction has been detected in the first bearer, the first layer function is configured to transmit a stop command to the second layer function, and
when the stop command is received before expiration of the second timer is detected, the second layer function is configured to temporarily stop the second timer.

16. The mobile station according to claim 15, wherein,
after the obstruction has been detected in the first bearer and the reconnection destination cell has been found, when having failed in a reconnection to the reconnection destination cell, the first layer function is configured to transmit a resuming command to the second layer function, and
when the resuming command is received before expiration of the second timer is detected, the second layer function is configured to resume the second timer.

17. The mobile station according to claim 15, wherein,
after the obstruction has been detected in the first bearer and the reconnection destination cell has been found, when having succeeded in a reconnection to the reconnection destination cell, the first layer function is configured to transmit a reset command to the second layer function, and
when the reset command is received before expiration of the second timer is detected, the second layer function is configured to reset the second timer.
